(19) Europäisches Patentamt
European Patent Office
Office européen des brevets

(11) Veröffentlichungsnummer: **0 283 830 B1**

(12) **EUROPÄISCHE PATENTSCHRIFT**

(45) Veröffentlichungstag der Patentschrift: **13.05.92**

(51) Int. Cl.[5]: **G01G 19/34**, G01G 19/22, G01G 11/00, G01F 1/00

(21) Anmeldenummer: **88103574.5**

(22) Anmeldetag: **08.03.88**

# (54) Verfahren zur Gewinnung einer ihre Komponenten im stöchiometrischen Gewichtsverhältnis aufweisenden Reaktionsmischung.

(30) Priorität: **27.03.87 DE 3710169**
**30.07.87 DE 3725238**

(43) Veröffentlichungstag der Anmeldung:
**28.09.88 Patentblatt 88/39**

(45) Bekanntmachung des Hinweises auf die Patenterteilung:
**13.05.92 Patentblatt 92/20**

(84) Benannte Vertragsstaaten:
**DE NL**

(56) Entgegenhaltungen:
**DE-A- 1 549 150**
**US-A- 4 202 466**

**SOVIET INVENTIONS ILLUSTRATED, Sektion EI, Woche 83/36, 19. Oktober 1983 DERWENT PUBLICATIONS LTD., London, S02**

(73) Patentinhaber: **HOECHST AKTIENGESELLSCHAFT**
**Postfach 80 03 20**
**W-6230 Frankfurt am Main 80(DE)**

(72) Erfinder: **Stendel, Joachim, Dr.**
**Schlaunstrasse 8**
**W-5040 Brühl(DE)**
Erfinder: **Diskowski, Herbert, Dr.**
**Fasanenaue 4**
**W-5042 Erftstadt(DE)**
Erfinder: **Mandelkow, Dietrich**
**Eschenweg 12**
**W-5042 Erftstadt(DE)**
Erfinder: **Gertz, Johann-Hinrich**
**Kiefernweg 8**
**W-5030 Hürth(DE)**

EP 0 283 830 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

## Beschreibung

Die vorliegende Erfindung betrifft ein Verfahren zur kontinuierlichen Gewinnung einer ihre Komponenten im stöchiometrischen Gewichtsverhältnis aufweisenden Reaktionsmischung aus Ballaststoffe enthaltenden Rohstoffen mit Hilfe von Dosiervorrichtungen. Unter Dosiervorrichtungen sind im Rahmen der Erfindung beispielsweise Dosierbandwaagen oder Durchlaufdosiergeräte zu verstehen, wobei ein Durchlaufdosiergerät aus einem auf Meßdosen stehenden Vorsilo, dessen Gewicht fortlaufend gemessen wird, und aus einem über die Gewichtsabnahme des Vorsilos pro Zeiteinheit gesteuerten, beispielsweise als Förderschnecke oder Förderband ausgebildeten Austragsorgan besteht.

Es ist bekannt, bei der Herstellung von gelbem Phosphor im elektrothermischen Reduktionsofen zur Bildung der Reaktionsmischung die Komponenten Rohphosphat, Koks und Kies mit Hilfe von drei Dosiervorrichtungen, beispielsweise Dosierbandwaagen, im stöchiometrischen Verhältnis zu wägen, wobei bei einer Dosierbandwaage die Ist-Förderstärke $\dot{G}$ als Produkt aus dem Gewicht des Fördergutes auf der Wägestrecke

$$G_{w_o}$$

und der Bandgeschwindigkeit $\dot{w}$ konstant gehalten wird:

$$\dot{G} = G_{w_o} \cdot \dot{w} = \text{const.}$$

Das wird erreicht, indem die Ist-Förderstärke $\dot{G}$ in einem Regler mit einem vorgegebenen Soll-Wert verglichen wird. Bei Abweichung der Ist-Förderstärke $\dot{G}$ vom Soll-Wert ändert der Regler die Bandgeschwindigkeit $\dot{w}$ derart, daß die Ist-Förderstärke dem Soll-Wert wieder entspricht.

Nachteilig ist bei den bekannten Dosierverfahren, daß die Wägung der Komponenten im stöchiometrischen Verhältnis nur möglich ist, wenn die chemische Zusammensetzung der zu wägenden Rohstoffe über einen längeren Zeitraum nur in sehr engen Grenzen schwankt. Dies ist in der Regel beispielsweise dann nicht der Fall, wenn feuchte Rohstoffe, abgesiebtes Rückgut oder unter Verwendung von Bindemittel aus Stäuben hergestellte Briketts dosiert werden, d. h. Komponenten mit einem Ballaststoff.

Es ist daher Aufgabe der vorliegenden Erfindung, ein Verfahren zur kontinuierlichen Gewinnung einer Reaktionsmischung mit Komponenten in stöchiometrischem Verhältnis mit Hilfe von Dosiervorrichtungen anzugeben, bei welchem auch bei Ballaststoffe enthaltenden Rohstoffen die Stöchiometrie unter den Komponenten exakt eingehalten wird. Das wird erfindungsgemäß dadurch erreicht, daß bei einem einen Ballaststoff enthaltenden Rohstoff die für die reine Komponente geltende Soll-Förderstärke $\dot{G}$ fortlaufend mit einem Korrekturfaktor $\gamma$ multipliziert wird, welcher nur mit der Schüttdichte $\rho$ des den Ballaststoff enthaltenden Rohstoffes variabel ist.

Das Verfahren gemäß der Erfindung kann weiterhin wahlweise auch noch dadurch ausgestaltet sein, daß

a) der Korrekturfaktor $\gamma$ sich bei einem Ballaststoff, welcher selber Reaktionspartner ist, in erster Näherung durch das um 1 vermehrte Produkt aus einem um 1 vermehrten Stöchiometriefaktor $\sigma$ und einem den Anteil des Ballaststoffes im Rohstoff angebenden Anteilsfaktor $\alpha$ darstellen läßt;

b) zu dem Korrekturfaktor $\gamma$ in zweiter Näherung ein Glied addiert wird, welches aus dem Quadrat des Produktes aus dem um 1 vermehrten Stochiometriefaktor $\sigma$ und dem Anteilsfaktor $\alpha$ besteht;

c) der Korrekturfaktor $\gamma$ sich bei einem Ballaststoff, welcher kein Reaktionspartner ist, in erster Näherung durch einem um 1 vermehrten, den Anteil des Ballaststoffes im Rohstoff angebenden Anteilsfaktor $\alpha$ darstellen läßt;

d) der Anteilsfaktor $\alpha$ gleich dem Quotienten aus der Differenz der Dichten des Ballaststoffe enthaltenden Rohstoffes und der ersten reinen Komponente sowie der Differenz der Dichten einer weiteren reinen Komponente und der ersten reinen Komponente ist;

e) der Anteilsfaktor $\alpha$ für den Fall, daß der Ballaststoff Wasser in Form von Feuchtigkeit ist, gleich dem Quotienten aus der Differenz der Dichten des feuchten Rohstoffes und der reinen Komponente sowie der Dichte der reinen Komponente ist.

Das erfindungsgemäße Verfahren kann zur Gewinnung der Reaktionsmischung für die Herstellung von gelbem Phosphor im elektrothermischen Reduktionsofen angewendet werden.

Beim Verfahren gemäß der Erfindung wird ein Mengenstrom einer Reaktionsmischung erzeugt, in welcher die wirksame Komponente immer in einer stöchiometrischen Menge läuft, und zwar stöchiometrisch zu der Menge mindestens einer anderen Komponente, welche auf einer zweiten Waage fest eingestellt ist. Dabei kann als Vorrichtung zur Erzeugung des Mengenstromes beispielsweise eine Dosierbandwaage oder ein Durchlaufdosiergerät dienen.

Beim erfindungsgemäßen Verfahren schlägt sich die Zusammensetzung der Ballaststoffe aufweisenden Komponente in ihrer Schüttdichte $\rho_M$ nieder, wenn sich die Schüttdichten der beiden die Komponenten bildenden Stoffe hinreichend voneinander unterscheiden. Dabei wird bei der Verwendung von Dosierbandwaagen die als Regelgröße dienende Schüttdichte $\rho_M$ als Quotient aus der Förderstärke $\dot{G}$ und dem durchgesetzten Fördervolumen pro Zeit $q \cdot \dot{w}$ ($q \mathrel{\hat{=}}$ Querschnitt des Förderstromes, $\dot{w} \mathrel{\hat{=}}$ Bandgeschwindigkeit) gebildet, während bei der Verwendung eines Durchlaufdosiergerätes (wägbares Silo mit steuerbarem Austragsorgan) die Schüttdichte $\rho_M$ diskontinuierlich aus dem volumengeeichten Fassungsvermögen des Silos bei Vollstand und dessen Füllgewicht ermittelt wird. Im Zuge der Dosierung aus dem Silo ergibt sich aus seinem jeweiligen Füllstand und seinem aktuellen Gewicht das durchschnittliche Schüttgewicht.

Wendet man das Verfahren gemäß der Erfindung auf die Gewinnung der Reaktionsmischung zur Herstellung von gelbem Phosphor im elektrothermischen Reduktionsofen an, so ist es damit u.a. möglich, den beim Absieben der Reaktionsmischung anfallenden, mit Rohphosphat verunreinigten Koksstaub, beispielsweise zur Beschickung in den Reduktionsofen durch eine Hohlelektrode, im stöchiometrischen Verhältnis zu dosieren.

Es Zeigen:

| | |
|---|---|
| Tabelle 1 | Ansätze für Beispiel 1 |
| Tabelle 2 | Ansätze für Beispiel 2 |
| Tabelle 3 | Ansätze für Beispiel 3 |
| Figur 1 | Schüttdichte Koksgrus-Phosphatgrus-Gemisch über Anteilsfaktor |
| Figur 2 | Korrekturfaktor über Schüttdichte Koksgrus-Phosphatgrus-Gemisch für Beispiel 1 |
| Figur 3 | Korrekturfaktor über Schüttdichte Naßkoksgrus-Phosphatgrus-Gemisch für Beispiel 2 |
| Figur 4 | Korrekturfaktor über Schüttdichte Koksgrus-Sulfitlauge-Briketts für Beispiel 3 |

Aus der Figur 1 geht hervor, daß die Schüttdichte $\rho_M$ des Koksgrus-Phosphatgrus-Gemisches eine eindeutige Funktion der Schüttdichten des reinen Koksgruses ( $\rho_K$ = 760 g/dm$^3$) bzw. Phosphatgruses ( $\rho_P$ = 1370 g/dm$^3$) sowie des Gewichtsanteils beider Stoffe ist. Hierbei wurde ein Gemisch aus Koksgrus 0 bis 6 mm und aus Phosphatgrus 40 % < 1 mm verwendet. Damit gibt die Schüttdichte $\rho_M$ den Anteil des für die Phosphatreduktion wirksamen Kokses an. Für den Anteilsfaktor $\alpha$ gilt:

$$\alpha = \frac{\rho_M - \rho_K}{\rho_P - \rho_K}$$

( $\rho_K \mathrel{\hat{=}}$ Schüttgewicht des reinen Koksgruses, $\rho_P \mathrel{\hat{=}}$ Schüttgewicht des reinen Phosphatgruses, $\alpha \mathrel{\hat{=}}$ Gewichtsanteil Phosphat im Gemisch).

Bei Kenntnis des Anteilsfaktors $\alpha$ und unter Berücksichtigung der Stöchiometrie läßt sich der Korrekturfaktor $\gamma$ angeben, mit dem die Soll-Förderstärke des reinen Kokses korrigiert werden muß, um auf den Soll-Wert des Koksgrus-Phosphatgrus-Gemisches zu kommen, wodurch erreicht wird, daß in dem Gemisch immer die stöchiometrische Koksmenge läuft.

Für den Korrekturfaktor $\gamma$ gilt:

$$\gamma = \frac{1}{1 - \alpha(1 + \sigma)} .$$

Als Reihe entwickelt ergibt sich:

$$\gamma = 1 + \alpha(1 + \sigma) + [\alpha(1 + \sigma)]^2 + \ldots.$$

Mit dem oben angegebenen Wert für $\alpha$ :

$$\gamma = \frac{\rho_P - \rho_M}{(\rho_P + \rho_K) - \rho_M (1 + \sigma)}$$

Dabei ist $\sigma$ der Stöchiometriefaktor, welcher das Verhältnis der stöchiometrischen Mengen von reinem Koks zu reinem Phosphat in der Reaktionsmischung angibt. Es ist ersichtlich, daß der Korrekturfaktor $\gamma$ nur mit der Schüttdichte des Koksgrus-Phosphatgrus-Gemisches $\rho_M$ variabel ist, während $\rho_K$ und $\rho_P$ die Schüttdichten der reinen Stoffe sind.

Setzt man in die Gleichung für den Korrekturfaktor $\gamma$ die angegebenen Schüttdichten für reinen Koksgrus $\rho_K$ = 760 [ kg/m$^3$ ] bzw. Phosphatgrus $\rho_P$ = 1370 [ kg/m$^3$ ] ein und $\sigma$ = 0,187, so ergibt sich

$$\gamma = \frac{1}{2,478 - 1,187 \cdot \rho_M \cdot 10^{-3}}$$

Der Korrekturfaktor $\gamma$ als Funktion der Schüttdichte $\rho_M$ des Koksgrus-Phosphatgrus-Gemisches ist in Figur 2 dargestellt.

Die Regelgröße $\rho_M$ ist bei einer Dosierbandwaage aus den kontinuierlich anfallenden Daten Förderstärke $\dot{G}$ und Bandgeschwindigkeit $\dot{w}$ leicht errechenbar. Grundsätzlich gilt dies auch bei anderen auf Wägung beruhenden Dosiersystmen, beispielsweise Durchlaufdosiergeräten, bei welchen bei einem auf Meßzellen stehenden Wägegefäß aus dem Nettogewicht und dem Füllvolumen die Schüttdichte ermittelt und über ein Austragsorgan der Förderstrom geregelt wird. Die Gewichtsabnahme pro Zeit, die Förderstärke $\dot{G}$, wird als Ist-Wert in einen Regler eingegeben, welcher beim Abweichen vom Sollwert auf die Fördergeschwindigkeit derart einwirkt, daß die Förderstärke $\dot{G}$ auf den Sollwert zurückgeführt wird.

Bei Anwendung der Verfahren gemäß der Erfindung auf die Gewinnung der Reaktionsmischung zur Herstellung von gelbem Phosphor im elektrothermischen Reduktionsofen ist es auch möglich, nassen, stückigen Koks oder unter Verwendung von Bindemittel, beispielsweise Sulfitablauge, erhaltene Koksgrusbriketts im stöchiometrischen Verhältnis zu dosieren. In diesem Fall besteht ein einfacher Zusammenhang zwischen dem Soll-Wert von trockenem Koks und dem Soll-Wert des nassen Kokses bzw. der Koksgrusbriketts, so daß für den Korrekturfaktor $\gamma$ und für den Anteilsfaktor $\alpha$ gilt:

$$\gamma = \frac{1}{1 - \alpha}$$

Als Reihe entwickelt ergibt sich:
$\gamma = 1 + \alpha + \alpha^2 + .....$

Es ergibt sich mit

$$\alpha = \frac{\rho_M - \rho_K}{\rho_K}$$

$$\gamma = \frac{\rho K}{2 \cdot \rho_K - \rho_M}$$

Dabei gibt $\alpha$ den auf Trockenkoks bezogenen Anteil der Feuchtigkeit bzw. des Bindemittels an.

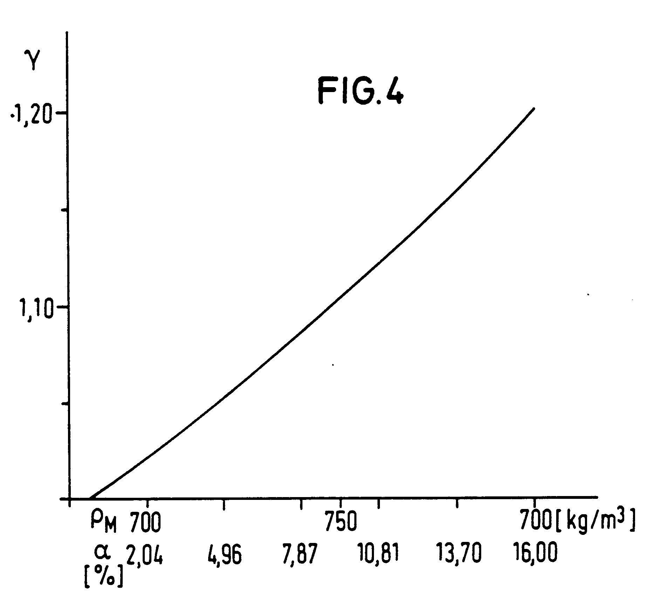

In Figur 3 ist der Korrekturfaktor $\gamma$ für nassen stückigen Koks, in Figur 4 der Korrekturfaktor $\gamma$ für Koksgrusbriketts - jeweils in Abhängigkeit von der Schüttdichte - dargestellt.

In den folgenden Beispielen 1 bis 3 wurde das erfindungsgemäße Verfahren unter Verwendung von Dosierbandwaagen durchgeführt, während beim Beispiel 4 ein Durchlaufdosiergerät verwendet wurde.

Beispiel 1

Die elektrothermische Herstellung von gelbem Phosphor erfolgt aus den Komponenten Phosphat und Koks, wobei als Rohstoffe reines Phosphat und mit Phosphat verunreinigter Koks verwendet werden.

Für ein Koksgrus-Sinterphosphatgrus-Gemisch soll ein Ist-Wert der Förderstärke $\dot{G}_1$ auf den Soll-Wert

$$\dot{G}_2 = f(p_1) \cdot \dot{G}_K$$

auf einer Bandwaage eingeregelt werden, wobei

$$\dot{G}K = \sigma \cdot \dot{G}_p$$

ist. Dazu wird die durch einen Rechner aus der Förderstärke $\dot{G}_1$, der Bandgeschwindigkeit $\dot{w}$ und dem Querschnitt des Förderstromes q fortlaufend ermittelbare Schüttdichte $p_1$ in die Funktion $\gamma = f(p_1)$ unter Erhalt des Korrekturfaktors $\gamma_2$ eingegeben. Mit $\gamma_2$ wird der Soll-Wert für reinen Koks $\dot{G}_K$ unter Erhalt von $\dot{G}_2$ multipliziert. Dann wird mit Hilfe eines Reglers der Ist-Wert $\dot{G}_1$ auf den Soll-Wert $\dot{G}_2$ eingeregelt, so daß schließlich der Soll-Wert des reinen Kokses läuft.

Diese durch den Rechner und einen Regler automatisch unmittelbar aufeinander ablaufenden Schritte wurden per Hand nacheinander durchgeführt. Hierzu wurden vier Gemische aus Koksgrus und Sinterphosphatgrus mit unbekanntem Mischungsverhältnis hergestellt, deren Zusammensetzung mit Hilfe einer Bandwaage ermittelt wurde. Weiterhin wurde geprüft, ob in der Förderstärke des Koksgrus-Sinterphosphat-Gemisches jeweils die Soll-Koksmenge läuft.

Die vier Gemische wurden nacheinander so in den Bandwaagenvorbunker eingebracht, daß das nächste Gemisch eingefüllt wurde, sobald das vorhergehende ausgelaufen war.

Bei einer Einstellung der Sinterphosphat-Formlinge wägenden Bandwaage auf 20.000 kg/h beträgt der Soll-Wert der Förderstärke von reinem Koks 3.740 kg/h. Der Querschnitt des Förderstromes q der den Koks wägenden Bandwaage betrug 0,066 $m^2$.

Mit jedem neuen Gemisch aus Koksgrus und Sinterphosphatgrus stellt sich bei zunächst gleichbleibender Bandgeschwindigkeit $\dot{w}$ durch die andere Schüttdichte $\rho$ eine neue Förderstärke $\dot{G}$ ein. Aus dieser neuen Förderstärke, der Bandgeschwindigkeit und dem Querschnitt des Förderstromes wurde die neue Schüttdichte errechnet. Für dieses Schüttdichte wurde aus Figur 2 der Korrekturfaktor abgelesen, mit dem der Soll-Wert der Förderstärke von reinem Koks zu multiplizieren ist, um über die Änderung der Bandgeschwindigkeit diesen Soll-Wert zu erreichenen.

Wie aus der Tabelle 1 ersichtlich ist, wurde beim Gemisch I der Ist-Wert der Förderstärke dem Sollwert von 6.133 kg/h durch Änderung der Bandgeschwindigkeit auf 96,8 m/h angeglichen; die Schüttdichte betrug unverändert 960 $kg/m^3$.

Beim Anlaufen des Gemisches II stieg die Förderstärke bei einer Bandgeschwindigkeit von 93,3 m/h auf 6210 kg/h an, woraus sich die Schüttdichte von 1008 $kg/m^3$ und aus Figur 2 der Korrekturfaktor 1,94 ergab. Multipliziert mit 3740 kg/h resultierte daraus die neue soll-Förderstärke von 7255 kg/h, welche über eine Bandgeschwindigkeit von 109 m/h eingestellt wurde.

Beim Anlaufen des Gemisches III ging die Förderstärke bei einer Bandgeschwindigkeit von 102 m/h auf 5210 kg/h zurück, woraus sich die Schüttdichte von 774 $kg/m^3$ und aus Figur 2 der Korrekturfaktor 1,03 ergab. Multipliziert mit 3740 kg/h resultierte daraus die neue Soll-Förderstärke von 3852 kg/h, welche über eine Bandgeschwindigkeit von 75,4 m/h eingestellt wurde.

Beim Anlaufen des Gemisches IV stieg die Förderstärke bei gleichgebliebener Bandgeschwindigkeit auf 5141 kg/h, woraus sich die Schüttdichte von 1033 $kg/m^3$ und aus Figur 2 der Korrekturfaktor 2.28 ergab. Multipliziert mit 3740 kg/h resultierte daraus die neue Soll-Förderstärke von 8527 kg/H, welche über eine Bandgeschwindigkeit von 125 m/h eingestellt wurde.

Der Koksgenalt der Gemische I bis IV wurde durch Flotation ermittelt:

| Gemisch | Flotiertes Gemisch (kg) | darin enthaltener Koks | | Koks-Soll-Gehalt (Gew.-%) |
|---|---|---|---|---|
| | | (kg) | (Gew.-%) | |
| I | 20,6 | 3,85 | 18,68 | 18,7 |
| II | 21,3 | 4,00 | 18,78 | 18,7 |
| III | 20,5 | 3,75 | 18,29 | 18,7 |
| IV | 20,4 | 3,75 | 18,38 | 18,7 |

Beispiel 2

Mit der in Beispiel 1 benutzten Einrichtung soll für einen verunreinigten Koks-Rohstoff der Soll-Wert der Förderstärke $\dot{G}_2$ ermittelt werden, mit dem die Dosierbandwaage einzustellen ist, um der Förderstärke $\dot{G}_p$ der Phosphatbandwaage äquivalent zu sein. Dabei ist der Rohstoff Koks nicht mit Phosphat sondern mit Feuchtigkeit "verunreinigt"; es Handelt sich also um Naßkoks.

Naßkokse wurden durch Absieben der Fraktion von 10 bis 20 mm aus Brechkoks IV gewonnen. Die Schüttdichte des aus dieser Fraktion gewonnenen Trockenkokses ergab sich bei einem Querschnitt des Förderstromes q = 0,066 $m^2$ und der mit Hilfe der Bandgeschwindigkeit w = 142,1 m/h eingestellten Förderstärke von $\dot{G}$ = 5000 kg/h zu p = 533 $kg/m^3$.

Vier Naßkokse mit unterschiedlichem Feuchtigkeitsgehalt wurden nacheinander so in den Bandwaagenvorbunker eingebracht, daß der nächste Naßkoks eingefüllt wurde, sobald der vorhergehende ausgelaufen war.

Wie aus Tabelle 2 ersichtlich ist, ergab sich beim Laufen des Naßkokses I mit der Bandgeschwindigkeit von 102,4 m/h eine Förderstärke von 4110 kg/h, was einer Schüttdichte von 608 $kg/m^3$ entspricht. Aus Figur 3 folgte daraus der Korrekturfaktor $\gamma$ von 1,164, welcher nach Multiplikation mit 3740 kg/h die neue Soll-Förderstärke von 4353 kg/h ergab. Dieser Wert wurde mit der Bandgeschwindigkeit $\dot{w}$ von 108,5 m/h eingestellt.

Gelangte Naßkoks II auf die Bandwaage, so ergab sich bei unveränderter Bandgeschwindigkeit eine Förderstärke von 4167 kg/h, woraus die Schüttdichte von 582 $kg/m^3$ und aus Figur 3 der Korrekturfaktor von 1,100 resultierte. Multipliziert mit 3740 kg/h ergab sich daraus die neue Soll-Förderstärke zu 4114 kg/h, welche über eine Bandgeschwindigkeit von 107 m/h eingestellt wurde.

Gelangte Naßkoks III auf die Bandwaage, so stellte sich bei unveränderter Bandgeschwindigkeit eine Förderstärke von 4420 kg/h ein. Daraus resultierte die Schüttdichte von 626 $kg/m^3$ und aus Figur 3 der Korrekturfaktor 1,212. Multipliziert mit 3740 kg/h ergab sich die neue Soll-Förderstärke zu 4533 kg/h, welche über eine Bandgeschwindigkeit von 110 m/h eingestellt wurde.

Gelangte schließlich Naßkoks IV auf die Bandwaage, so stellte sich bei unveränderter Bandgeschwindigkeit eine Förderstärke von 4533 kg/h ein. Daraus resultierte die Schütt-dichte von 582 $kg/m^3$ und aus Figur 3 der Korrekturfaktor 1,100. Multipliziert mit 3740 kg/h ergab sich die neue Soll-Förderstärke zu 4114 kg/h, welche über eine Bandgeschwindigkeit von 109 m/h eingestellt wurde.

Beispiel 3

Setzt man für die Komponente Koks zur Gewinnung der Reaktionsmischung zur Herstellung von gelbem Phosphor im elektrothermischen Reduktionsofen als Rohstoff Brikettbruch aus Koksgrus-Sulfitablauge-Briketts ein, so muß der aus Sulfitablaugefeststoff und Wasser bestehende Ballast berücksichtigt werden.

Als Ausgangs-Schüttdichte muß dabei die Schüttdichte einer Brikettbruchschüttung aus bindemittellosem Material angesetzt werden. Der Wert für diese Schüttdichte wurde ermittelt, indem 10 l einer Brikettbruchschüttung mit Wasser zersetzt wurden sowie der zurückbleibende Koksgrus abfiltriert, mit Wasser gewaschen und getrocknet wurde. Der Mittelwert aus 10 Proben betrug 6,85 kg, die Schüttdichte $\rho$ also 685 $kg/m^3$. Mit diesem Wert wurde die Funktion $\gamma = f(\rho)$ errechnet, welche in der Figur 4 dargestellt ist.

Vier Zusammensetzungen von Koksgrus-Sulfitablaugebriketts, welche sich in ihrem Gehalt an Wasser und Sulfitablaugenfeststoff unterschieden, wurden nacheinander so in den Vorbunker der in Beispiel 1 verwendeten Bandwaage eingebracht, daß die nächste Zusammensetzung eingefüllt wurde, sobald die vorhergehende ausgelaufen war.

Wie aus der Tabelle 3 ersichtlich ist, ergab sich beim Laufen der Zusammensetzung I mit einer Bandgeschwindigkeit $\dot{w}$ von 97,4 m/h bei einem Querschnitt des Förderstromes q von 0,066 $m^2$ eine Förderstärke $\dot{G}$ von 5000 kg/h. Daraus folgte eine Schüttdichte $\rho$ von 778 $kg/m^3$ und aus Figur 4 ein Korrekturfaktor $\gamma$ von 1,156. Nach Multiplikation mit 3740 kg/h ergab sich die Soll-Förderstärke zu 4358 kg/h. Dieser Wert wurde mit der Bandgeschwindigkeit 84,9 m/h eingestellt.

Gelangte die Zusammensetzung II auf die Bandwaage, so bewirkte dies bei unveränderter Bandgeschwindigkeit eine Abnahme der Förderstärke auf 4214 kg/h, woraus die Schüttdichte von 752 $kg/m^3$ und aus Figur 4 der Korrekturfaktor von 1,106 resultierte. Multipliziert mit 3740 kg/h ergab sich daraus die Soll-Förderstärke zu 4136 kg/h, welche über eine Bandgeschwindigkeit von 83,3 m/h eingestellt wurde.

Gelangte die Zusammensetzung III auf die Bandwaage, so bewirkte dies bei unveränderter Bandgeschwindigkeit eine Abnahme der Förderstärke auf 3970 kg/h, woraus die Schüttdichte von 722 $kg/m^3$ und aus Figur 4 der Korrekturfaktor von 1,056 resultierte. Nach Multiplikation mit 3740 kg/h ergab sich daraus die Soll-Förderstärke zu 3949 kg/h, welche über eine Bandgeschwindigkeit von 82,9 m/h eingestellt wurde.

Gelangte schließlich die Zusammensetzung IV auf die Bandwaage, so bewirkte dies bei unveränderter Bandgeschwindigkeit eine Zunahme der Förderstärke auf 4202 kg/h, woraus die Schüttdichte von 768 $kg/m^3$ und aus Figur 4 der Korrekturfaktor von 1,136 resultierte. Multipliziert mit 3740 kg/h ergab sich daraus die Soll-Förderstärke zu 4248 kg/h, welche über eine Bandgeschwindigkeit von 83,8 m/h eingestellt wurde.

Beispiel 4

Als Koks-Rohstoff wurde wie in Beispiel 2 Naßkoks verwendet.

Während zur Dosierung von Sinterphosphat-Formlingen (und Kies) je eine Bandwaage verwendet wurde, wurde der Naßkoks über ein Durchlaufdosiergerät zugewogen.

Das Durchlaufdosiergerät bestand aus einem auf Meßzellen stehenden Silo und einem Förderband als Austragsorgan, wobei das Füllvolumen des Silos 720 l und sein Taragewicht 125 kg betrug.

Bei einer Einstellung der Sinterphosphat-Formlinge wägenden Bandwaage auf 20.000 kg/h beträgt der Sollwert der Förderstärke von trockenem Koks 3.740 kg/h.

Das in seinem ganzen Volumen mit dem Naßkoks I gemäß Beispiel 2 gefüllte Silo Hatte ein Bruttogewicht von 563 kg und enthielt damit 438 kg Naßkoks.

Daraus ergab sich ein Schüttgewicht von 608 $kg/m^3$, was gemäß Figur 3 einen Korrekturfaktor von 1,166 entspricht. Die Förderstärke $\dot{G}$ für das Förderband betrug daher 1,166 • 3740 - 4.360 kg/h.

## TABELLE 1

Gemische aus Koksgrus und Sinterphosphatgrus

| | Eichung | Gemisch | | | | | | | |
|---|---|---|---|---|---|---|---|---|---|
| | | I | | II | | III | | IV | |
| | SOLL | IST | SOLL | IST | SOLL | IST | SOLL | IST | SOLL |
| $\dot{G}_K$ [kg/h] | 3 740 | | 3 740 | | 3 740 | | 3 740 | | 3 740 |
| q [$m^2$] | 0,066 | 0,066 | 0,066 | 0,066 | 0,066 | 0,066 | 0,066 | 0,066 | 0,066 |
| $G_M$ [kg/h] | 5 000 | 4 730 | 6 133 | 6 210 | 7 255 | 5 210 | 3 852 | 5 141 | 8 527 |
| $\dot{w}$ [m/h] | 99,7 | 74,6 | 96,8 | 93,3 | 109,1 | 102 | 75,4 | 75,4 | 125,1 |
| $\rho$ [$kg/m^3$] | 760 | 960 | 960 | 1 008 | 1 008 | 774 | 774 | 1 033 | 1 033 |
| $\gamma$ ($\rho_M$) | 1 | 1,64 | | 1,94 | | 1,03 | | 2,28 | |

TABELLE 2

Naßkokse

| | Eichung | Naßkoks | | | | | | | |
|---|---|---|---|---|---|---|---|---|---|
| | | I | | II | | III | | IV | |
| | SOLL | IST | SOLL | IST | SOLL | IST | SOLL | IST | SOLL |
| $\dot{G}_K$ [kg/h] | 3 740 | | 3 740 | | 3 740 | | 3 740 | | 3 740 |
| q [$m^2$] | 0,066 | 0,066 | 0,066 | 0,066 | 0,066 | 0,066 | 0,066 | 0,066 | 0,066 |
| $G_M$ [kg/h] | 5 000 | 4 110 | 4 353 | 4 167 | 4 114 | 4 420 | 4 533 | 4 225 | 4 114 |
| $\dot{w}$ [m/h] | 142,1 | 102,4 | 108,8 | 108,8 | 107 | 107 | 110 | 110 | 109 |
| $\rho$ [$kg/m^3$] | 533 | 608 | 608 | 582 | 582 | 626 | 626 | 582 | 582 |
| $\gamma(\rho_M)$ | 1 | 1,164 | | 1,100 | | 1,212 | | 1,100 | |

TABELLE 3

Brikettbruch aus Koksgrus-Sulfitablauge-Briketts

| | Eichung | Zusammensetzung | | | | | | | |
|---|---|---|---|---|---|---|---|---|---|
| | | I | | II | | III | | IV | |
| | SOLL | IST | SOLL | IST | SOLL | IST | SOLL | IST | SOLL |
| $\dot{G}_K$ [kg/h] | 3 740 | | 3 740 | | 3 740 | | 3 740 | | 3 740 |
| q [$m^2$] | 0,066 | 0,066 | 0,066 | 0,066 | 0,066 | 0,066 | 0,066 | 0,066 | 0,066 |
| $G_M$ [kg/h] | 5 000 | 5 000 | 4 358 | 4 214 | 4 136 | 3 970 | 3 949 | 4 202 | 4 248 |
| $\dot{w}$ [m/H] | 110,6 | 97,4 | 84,9 | 84,9 | 83,3 | 83,3 | 82,9 | 82,9 | 93,8 |
| $\varrho$ [$kg/m^3$] | 685 | 778 | 778 | 752 | 752 | 722 | 722 | 768 | 768 |
| $\gamma$ ($\varrho_M$) | 1 | 1,156 | | 1,106 | | 1,056 | | 1,136 | |

## Patentansprüche

1. Verfahren zur Gewinnung einer ihre Komponenten im stöchiometrischen Gewichtsverhältnis aufweisenden Reaktionsmischung aus Ballaststoffe enthaltenden Rohstoffen mit Hilfe von Dosiervorrichtungen, dadurch gekennzeichnet, daß bei einem einen Ballaststoff enthaltenden Rohstoff die für die reine Komponente geltende Soll-Förderstärke $\dot{G}$ fortlaufend mit einem Korrekturfaktor $\gamma$ multipliziert wird, welcher nur mit der Schüttdichte $\rho$ des den Ballaststoff enthaltenden Rohstoffes variabel ist.

2. Verfahren nach Anspruch 1, dadurch gekennzeichnet, daß der Korrekturfaktor $\gamma$ sich bei einem Ballaststoff, welcher selber Reaktionspartner ist, in erster Näherung durch das um 1 vermehrte Produkt aus einem um 1 vermehrten Stöchiometriefaktor $\sigma$ und einem den Anteil des Ballaststoffes im Rohstoff angebenden Anteilsfaktor $\alpha$ darstellen läßt.

3. Verfahren nach Anspruch 2, dadurch gekennzeichnet, daß zu dem Korrekturfaktor $\gamma$ in zweiter Näherung ein Glied addiert wird, welches aus dem Quadrat des Produktes aus dem um 1 vermehrten Stöchiometriefaktor $\sigma$ und dem Anteilsfaktor $\alpha$ besteht.

4. Verfahren nach Anspruch 1, dadurch gekennzeichnet, daß der Korrekturfaktor $\gamma$ sich bei einem Ballaststoff, welcher kein Reaktionspartner ist, in erster Näherung durch einen um 1 vermehrten, den Anteil des Ballaststoffes im Rohstoff angebenden Anteilsfaktor $\alpha$ darstellen läßt.

5. Verfahren nach Anspruch 4, dadurch gekennzeichnet, daß zu dem Korrekturfaktor $\gamma$ in zweiter Näherung ein Glied addiert wird, welches aus dem Quadrat des Anteilsfaktors besteht.

6. Verfahren nach einem der Ansprüche 2 bis 5, dadurch gekennzeichnet, daß der Anteilsfaktor $\alpha$ gleich dem Quotienten aus der Differenz der Dichten des Ballaststoffe enthaltenden Rohstoffes und der ersten reinen Komponente sowie der Differenz der Dichten einer weiteren reinen Komponente und der ersten reinen Komponente ist.

7. Verfahren nach Anspruch 6, dadurch gekennzeichnet, daß der Anteilsfaktor $\alpha$ für den Fall, daß der Ballaststoff Wasser in Form von Feuchtigkeit ist, gleich dem Quotienten aus der Differenz der Dichten des feuchten Rohstoffes und der reinen Komponente sowie der Dichte der reinen Komponente ist.

8. Anwendung des Verfahren nach einem der Ansprüche 1 bis 7 auf die Gewinnung der Reaktionsmischung zur Herstellung von gelbem Phosphor im elektrothermischen Reduktionsofen.

## Claims

1. A process for obtaining with the aid of dosing devices a reaction mixture having its components in a stoichiometric weight ratio and composed of raw materials containing other substances, which comprises, in the case of a raw material containing another substance, continuously multiplying the desired rate of conveyance $\dot{G}$ valid for the pure component by a correction factor $\gamma$, which is variable only with the bulk density $\rho$ of the raw material containing the other substance.

2. The process as claimed in claim 1, wherein, when the other substance is itself a reactant, the correction factor $\gamma$ can be represented as a first approximation by the product increased by 1 of a stoichiometric factor $\sigma$ increased by 1 and a proportionality factor $\alpha$ giving the proportion of the other substance in the raw material.

3. The process as claimed in claim 1, wherein as a second approximation a member is added to the correction factor $\gamma$, which comprises the square of the product of the stoichiometric factor $\sigma$ increased by 1 and the proportionality factor $\alpha$.

4. The process as claimed in claim 1, wherein, when the other substance is not a reactant, the correction factor $\gamma$ can be represented as a first approximation by a proportionality factor $\alpha$ increased by 1 giving the proportion of the other substance in the raw material.

5. The process as claimed in claim 4, wherein as a second approximation a member is added to the correction factor $\gamma$, which comprises the square of the proportionality factor $\alpha$.

6. The process as claimed in any of claims 2 to 5, wherein the proportionality factor $\alpha$ is equal to the quotient of the difference of the densities of the raw material containing the other substances and the first pure component and of the difference of the densities of a further pure component and the first pure component.

7. The process as claimed in claim 6, wherein, when the other substance is water in the form of moisture content, the proportionality factor $\alpha$ is equal to the quotient of the difference of the densities of the moist raw material and the pure component and the density of the pure component.

8. Use of the process as claimed in any of claims 1 to 7, applied to obtaining the reaction mixture for the purpose of preparing yellow phosphorus in an electrothermal reduction furnace.

**Revendications**

1. Procédé pour l'obtention d'un mélange de réaction de matières premières contenant des matières de ballast présentant ses composants dans le rapport pondéral stoechiométrique au moyen de dispositifs doseurs, caractérisé en ce que pour une matière première contenant une matière de ballast le débit théorique $\dot{G}$ valable pour le composant pur est multiplié constamment par un facteur de correction $\gamma$ qui ne varie qu'avec la densité apparente $\rho$ de la matière première contenant la matière de ballast.

2. Procédé selon la revendication 1, caractérisé en ce que le facteur de correction $\gamma$ pour une matière de ballast qui est elle-même un partenaire de réaction peut être représenté en 1$^{re}$ approximation par le produit augmenté de 1 d'un facteur de stoechiométrie $\sigma$ augmenté de 1 par un facteur de fraction $\alpha$ donnant la proportion de la matière de ballast dans la matière première.

3. Procédé selon la revendication 1, caractérisé en ce que l'on ajoute en 2$^{e}$ approximation au facteur de correction $\gamma$ un 2$^{e}$ terme égal au carré du produit du facteur de stoechiométrie $\sigma$ augmenté de 1 par le facteur de fraction $\alpha$.

4. Procédé selon la revendication 1, caractérisé en ce que le facteur de correction $\gamma$ pour une matière de ballast qui n'est pas un partenaire de réaction peut être représenté en 1$^{re}$ approximation par un facteur de fraction $\alpha$ donnant la proportion de la matière de ballast dans la matière première, augmenté de 1.

5. Procédé selon la revendication 4, caractérisé en ce que l'on ajoute en 2$^{e}$ approximation au facteur de correction $\gamma$ un terme égal au carré du facteur de fraction $\alpha$.

6. Procédé selon l'une des revendications 2 à 5, caractérisé en ce que le facteur de fraction $\alpha$ est égal au quotient de la différence des densités de la matière première contenant des matières de ballast et du premier composant pur par la différence des densités d'un autre composant pur et du premier composant pur.

7. Procédé selon la revendication 6, caractérisé en ce que le facteur de fraction $\alpha$, dans le cas où la matière de ballast est de l'eau sous forme d'humidité, est égal au quotient de la différence des densités de la matière première humide et du composant pur par la densité du composant pur.

8. Application du procédé selon l'une des revendications 1 à 7 à l'obtention du mélange de réaction pour la fabrication de phosphore blanc dans un four de réduction électrothermique.

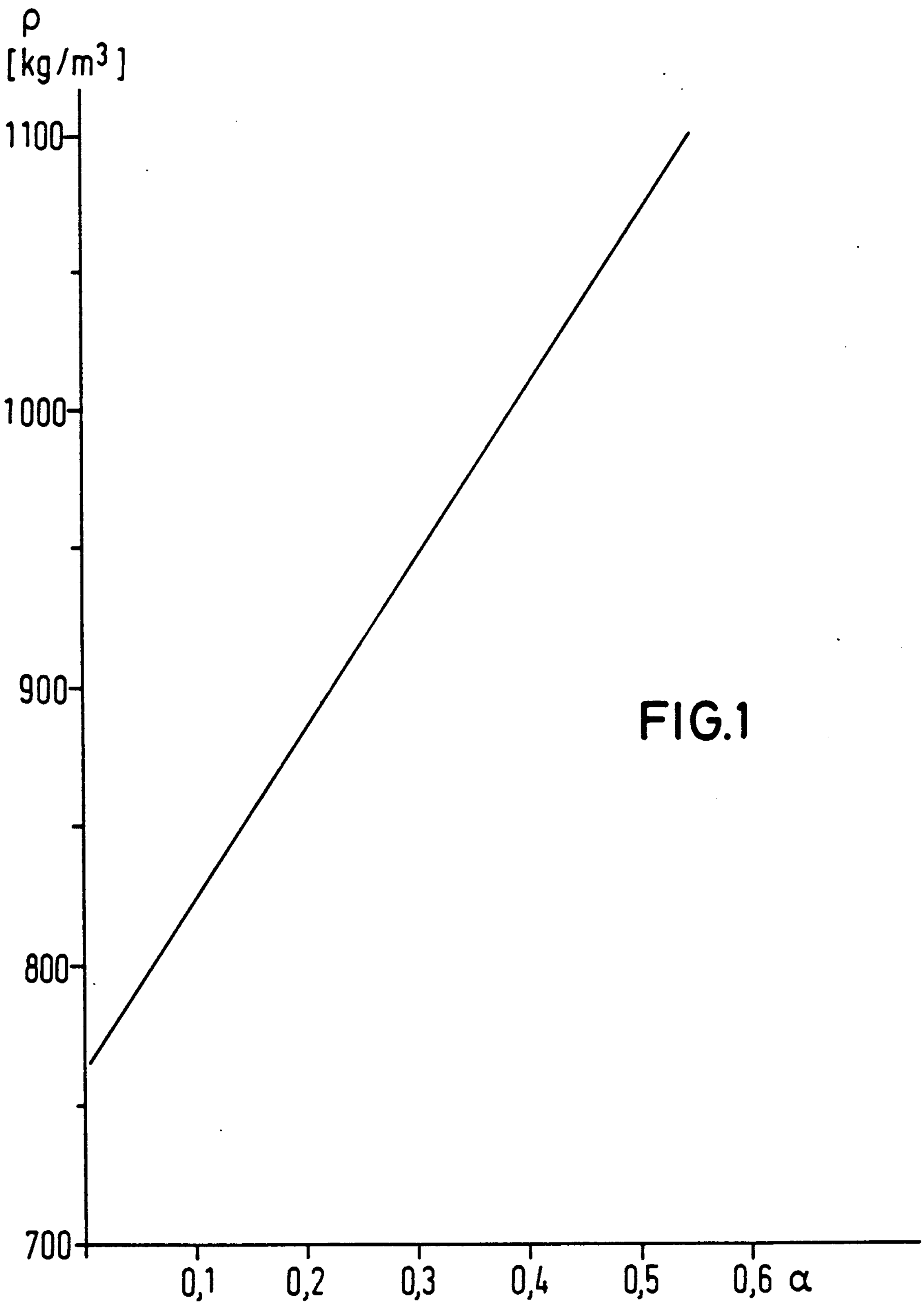


FIG.1

FIG. 2

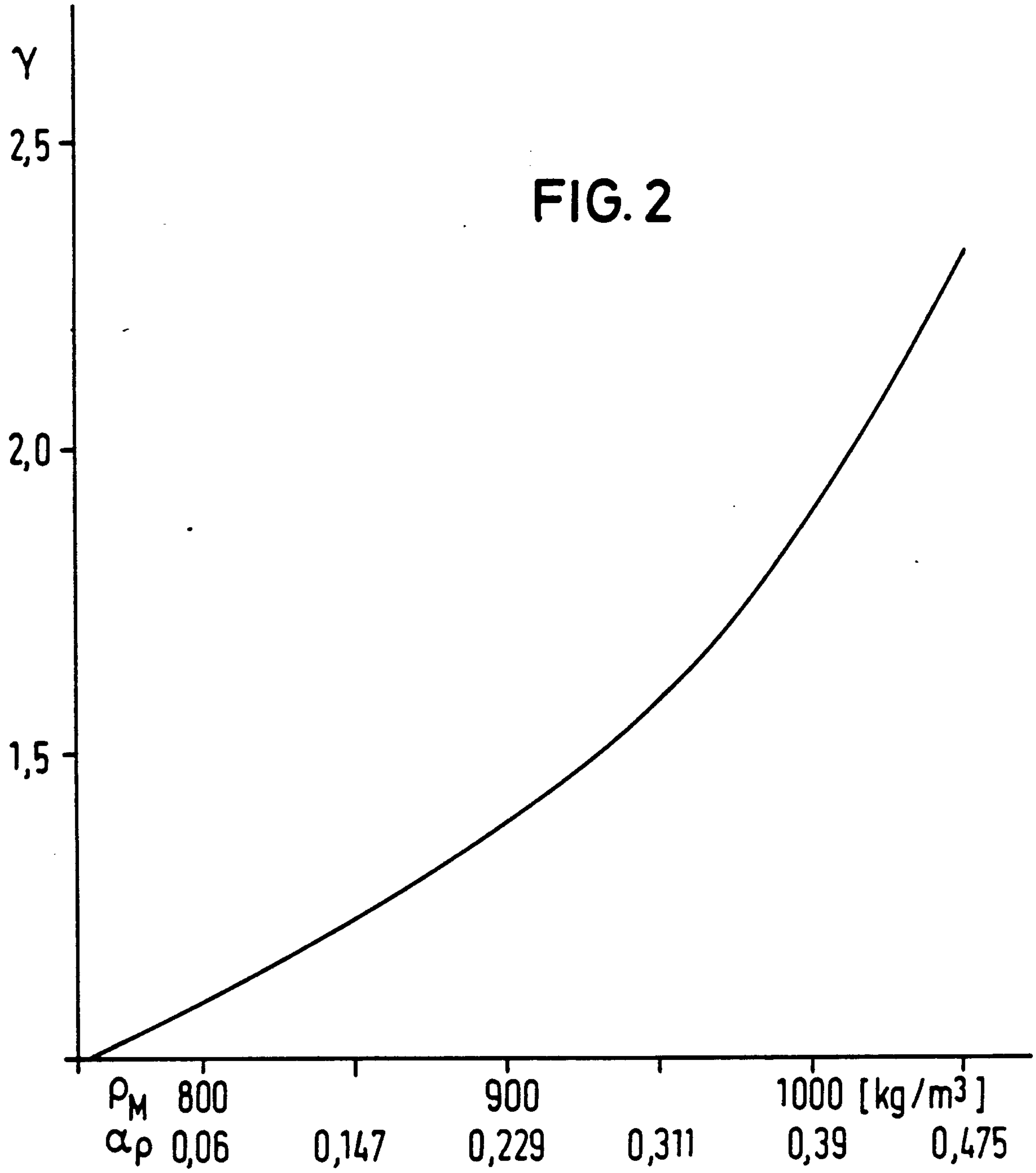
γ
2,5
2,0
1,5
$\rho_M$ 800 900 1000 [kg/m3]
$\alpha_\rho$ 0,06 0,147 0,229 0,311 0,39 0,475

FIG. 3

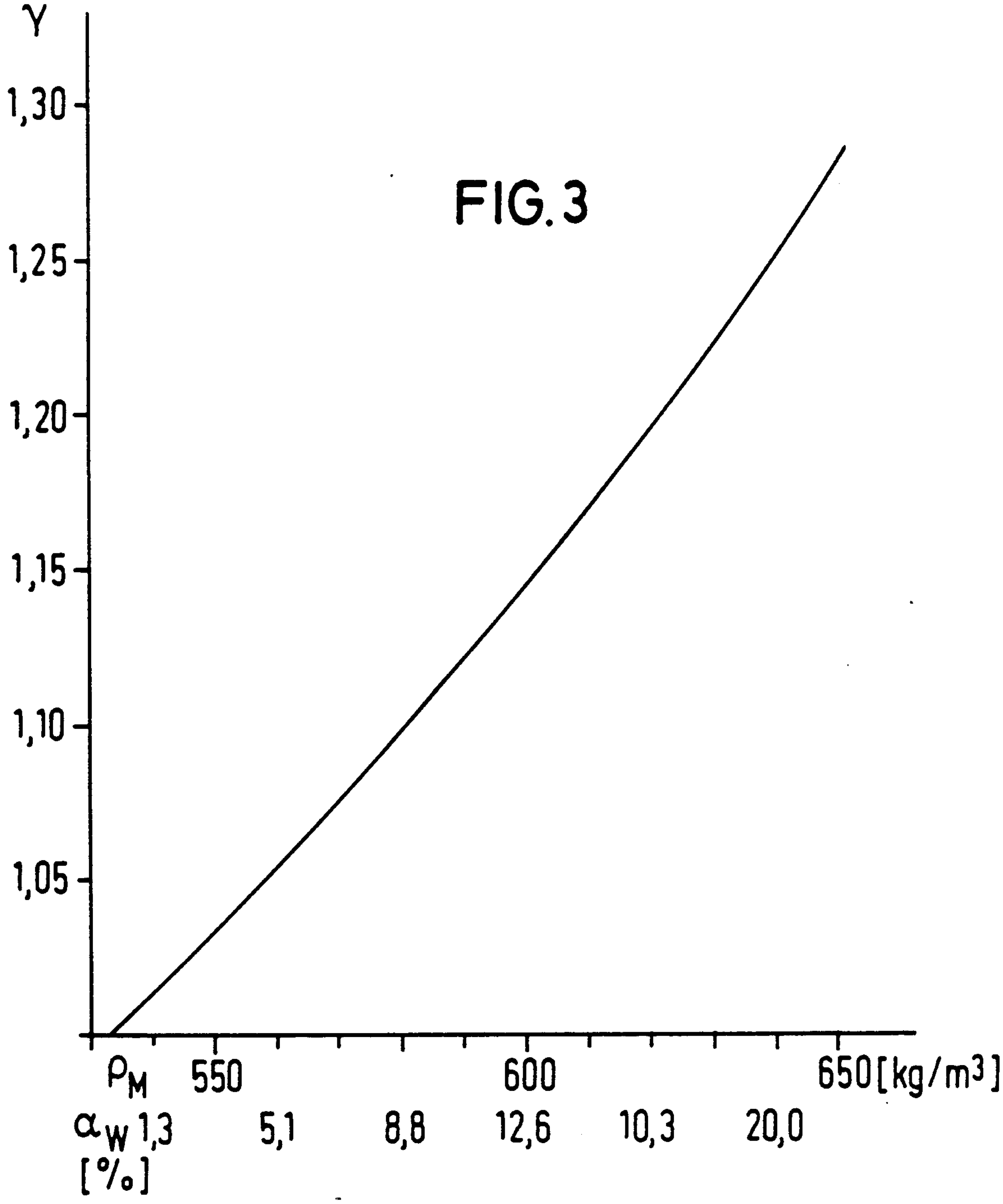
γ
1,30
1,25
1,20
1,15
1,10
1,05
ρM 550 600 650 [kg/m3]
αW 1,3 5,1 8,8 12,6 10,3 20,0
[%]

FIG. 4